Europäisches Patentamt

(19) European Patent Office

Office européen des brevets

(11) Publication number: **0 077 629**
**A2**

(12) # EUROPEAN PATENT APPLICATION

(21) Application number: **82305411.9**

(22) Date of filing: **12.10.82**

(51) Int. Cl.³: **G 01 F 11/22**
**B 67 D 3/00**

(30) Priority: **20.10.81 GB 8131666**
**14.07.82 GB 8220444**

(43) Date of publication of application:
**27.04.83 Bulletin 83/17**

(84) Designated Contracting States:
**AT BE CH DE FR GB IT LI LU NL SE**

(71) Applicant: **Evans, Alan Barton**
**Home Farm Monk Fryston**
**Leeds West Yorkshire(GB)**

(72) Inventor: **Evans, Alan Barton**
**Home Farm Monk Fryston**
**Leeds West Yorkshire(GB)**

(74) Representative: **Neill, Alastair William et al,**
**Appleyard Lees & Co. 15 Clare Road**
**Halifax West Yorkshire HX1 2HY(GB)**

(54) **Drinks dispenser.**

(57) A device for dispensing a liquid drink from a container, such as a bottle, comprises a chamber 60 connectable to the container to receive drink from the container, and a rotary valve device 71, 72, 73, 74 operable to dispense the drink from the chamber 60, for example into a glass 75.

FIG.3.

EP 0 077 629 A2

Drinks Dispenser

This invention relates to a device for dispensing liquid drinks accurately from containers in which they are stored.

It is necessary to dispense alcoholic and other liquid drinks in measured amounts very accurately in retail, domestic and other situations. This accuracy is necessary to conform with national laws and also because of the high specific cost of these drinks.

A known method is to utilise a separate accurate level measure and thence transfer this measured volume to a drinking vessel. This is a well tried and reliable method but suffers from one defect amongst others in that it is very time consuming to operate and unless the separate measure is cleaned each time mixing of different liquids occurs.

An improvement on this method is to use a device known as an 'OPTIC' which is temporarily connected to the liquid drinks container. A drinking vessel is forced upwards against a linear valve mechanism on the device and a known volume of liquid dispensed into the drinking vessel.

This is a well tried and reliable method but suffers from one defect amongst others in that the device consists of a large number of small and intricate parts. Another known defect is that these small and intricate parts of the device are immersed in the liquid which is being dispensed, and in many known cases, the said device fails to operate because of

2.

certain viscous liquids and deposits arresting the movement of the aforesaid small and intricate parts.

Other known defects include solids present in the tortuous path of the liquid from the device, and excessive force needed by two-handed operation which often results in broken glass drinking vessels.

The invention seeks to overcome or reduce these and other problems and allow liquid drinks and other liquids and powders to be accurately, quickly and regularly dispensed from containers in retail, domestic and other situations.

The invention also seeks to provide a dispenser which will be faster to operate than other known dispensers. Further also because of only a few simple working parts it will be both easier to make and keep clean and consequently cheaper to make and maintain in an hygenic working condition.

Accordingly the invention provides a device for dispensing a liquid drink from a container in which the drink is stored, the dispensing device comprising a chamber connectable to the container to receive drink from the container, and a rotary valve device operable to dispense the drink from the chamber.

Preferably the chamber has an inlet aperture through which to receive the drink, and an outlet aperture through which to dispense the drink, the rotary valve device being operable to close the inlet aperture before opening the outlet aperture so that a metered quantity of drink is dispensed, dependent upon the volume of the chamber.

The rotary valve device may be biased into a charging position in which the inlet aperture is open and the outlet aperture is closed, but be movable against the action of the bias into a dispensing position in which the inlet aperture is closed and the outlet aperture is open.

The rotary valve device may have an operating member which can be moved, for example by a glass into which drink is to be dispensed, to move the rotary valve device from the charging position to the dispensing position.

The rotary valve device may be biased by a spring device.

The rotary valve device may comprise a rotary valve member arranged for rotation within the chamber.

The rotary valve member may have a pair of valve surfaces, one to open and close the inlet aperture and a second to open and close the outlet aperture.

The valve surfaces may comprise shoes each mounted on a support leg, the legs being mounted on a pivot.

The pivot may extend out of the chamber to the operating member.

The pivot may comprise a shaft each end of which projects out of the chamber, the operating member extending around the chamber to interconnect the ends of the shaft.

The rotary valve device may be arranged, when in the dispensing position, to uncover a vent hole to permit air to enter the chamber as drink flows out of the chamber.

The volume of the chamber may be adjustable to enable the quantity of drink dispensed to be adjusted.

One or more slugs may be provided which may be inserted into the chamber to reduce its volume.

The or each slug may conventiently be mounted on the shaft.

The rotary valve device may be arranged to provide a secondary seal for the outlet aperture.

4.

The secondary seal may be provided by co-operation between the operating member and the chamber.

By way of example, specific embodiments of the invention will now be described, with reference to the accompanying drawings, in which:-

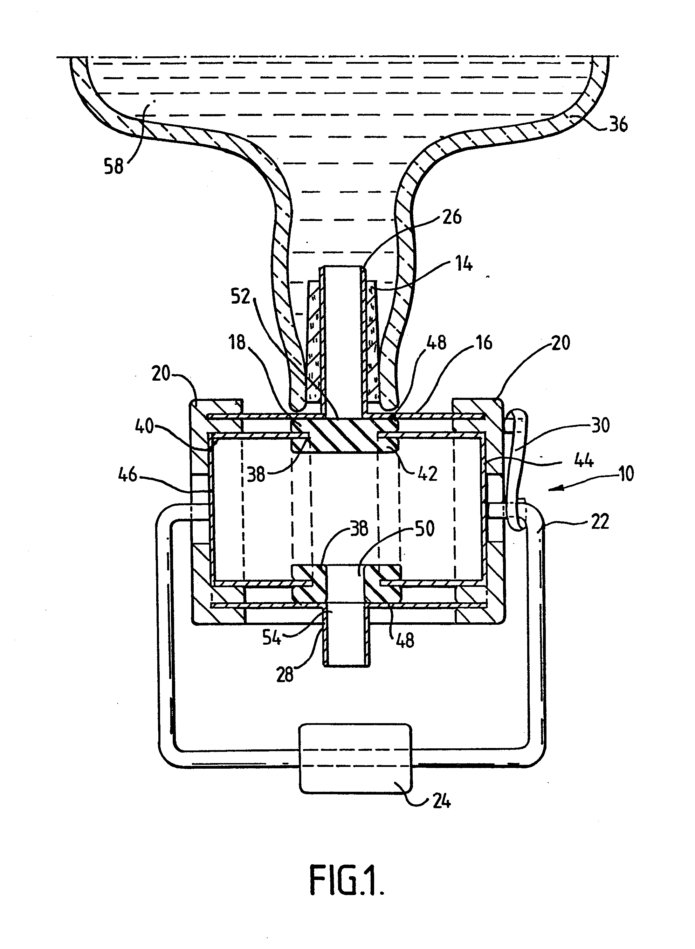

. Figure 1 is a front view, in cross section, of a first embodiment of drinks dispenser according to the invention;

Figure 2 is a side view, in cross-section, of the dispenser shown in Figure 1;

Figure 3 is a side view, in cross-section, of a second embodiment of drinks dispenser according to the invention, shown in the charging position;

Figure 4 is a plan view of the dispenser shown in Figure 3;

Figure 5 is a view similar to Figure 3 but showing the dispenser in the dispensing position; and

Figure 6 is a front view, in cross-section, of the dispenser as shown in Figure 3.

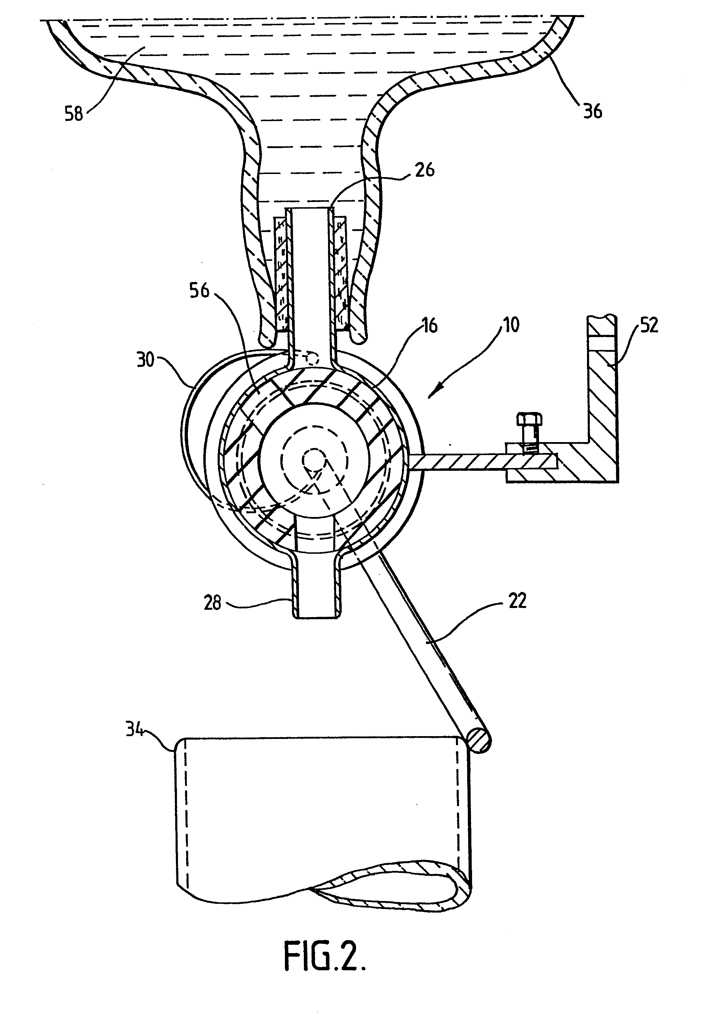

The first embodiment of liquid drinks dispenser according to the invention is indicated generally in Figures 1 and 2 by numeral 10. The dispenser is intended for use with liquid filled containers, for example a bottle indicated by numeral 36.

The dispenser has a cork or bung 14 with a longitudinal hole which receives a top tube 26 of an outer container 16, the outer container also having a bottom tube 28. The dispenser includes an inner container 40 which is defined by a hollow tube having closed ends 44 and 46 which are integral with an operating lever 22.

Included in the dispenser 10 is an inner seal 42 which abuts firmly against a transverse hole 38 and a face 48. The inner seal 42 includes a plain transverse aperture 50.

Also included in the dispenser 10 are two outer seals 20 which abut firmly against the outer container 16 and the inner container 40.

Referring to Figures 1 and 2, the method of operating the dispenser 10 involves pushing a drinking vessel 34 against the operating lever 22, causing the inner container 40 to rotate inside the outer seals 20, since the ends 44, 46 of the inner container 40 are connected to operating lever. This operation causes the flow of liquid 58 from the container 36 to be stopped by the seal 42 which closes the aperture 52 of the tube 26, and the same operation causes the aperture 50 of the inner seal 42 to become aligned with the aperture 54 of tube 28 of the outer container 16, causing gravity to dispense the contents of the inner container 30 through tube 28. Removal of vessel 34 from operating lever 22 allows a return spring 30 to rotate the inner container 40 to which the inner seal 42 is connected, and this removal both closes aperture 54 with seal 42 and aligns aperture 52 of the tube 26 with aperture 56, thus allowing liquid 58 to refill the inner container 40.

A plaque 24 is attached to the horizontal portion of the operating lever 22 and is used for advertising, price display or some other display. A mounting bracket 32 is provided for attachment to the chamber 16 of the dispenser 10 so that the chamber 16 can be securely mounted on a support surface.

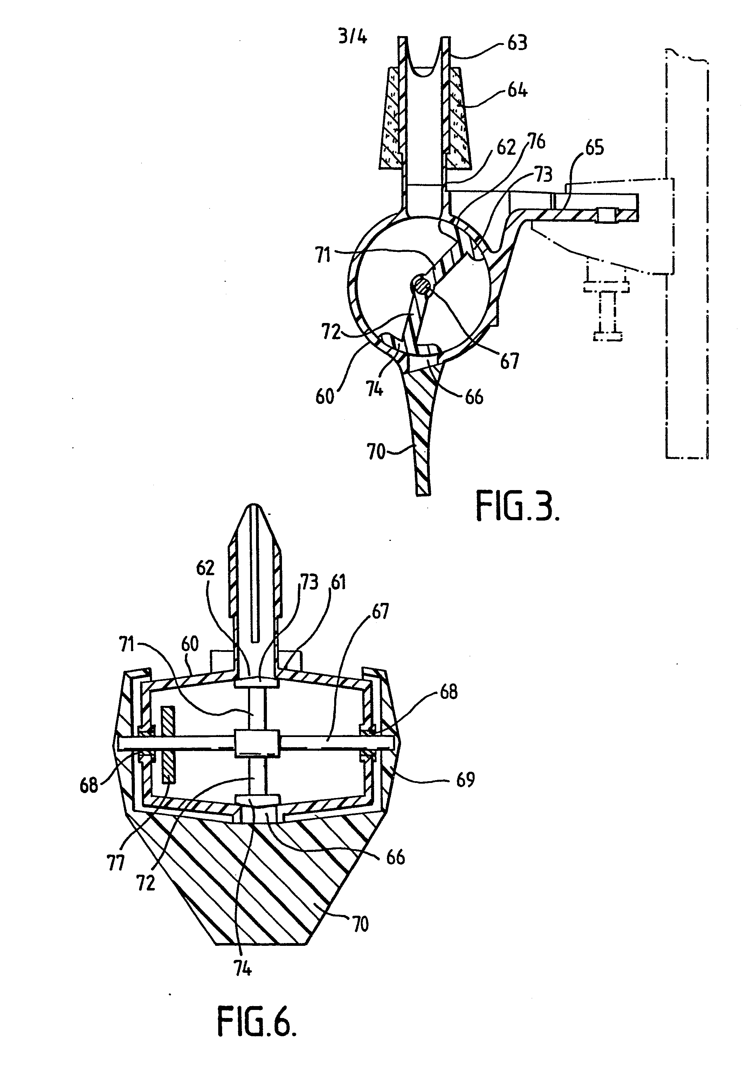

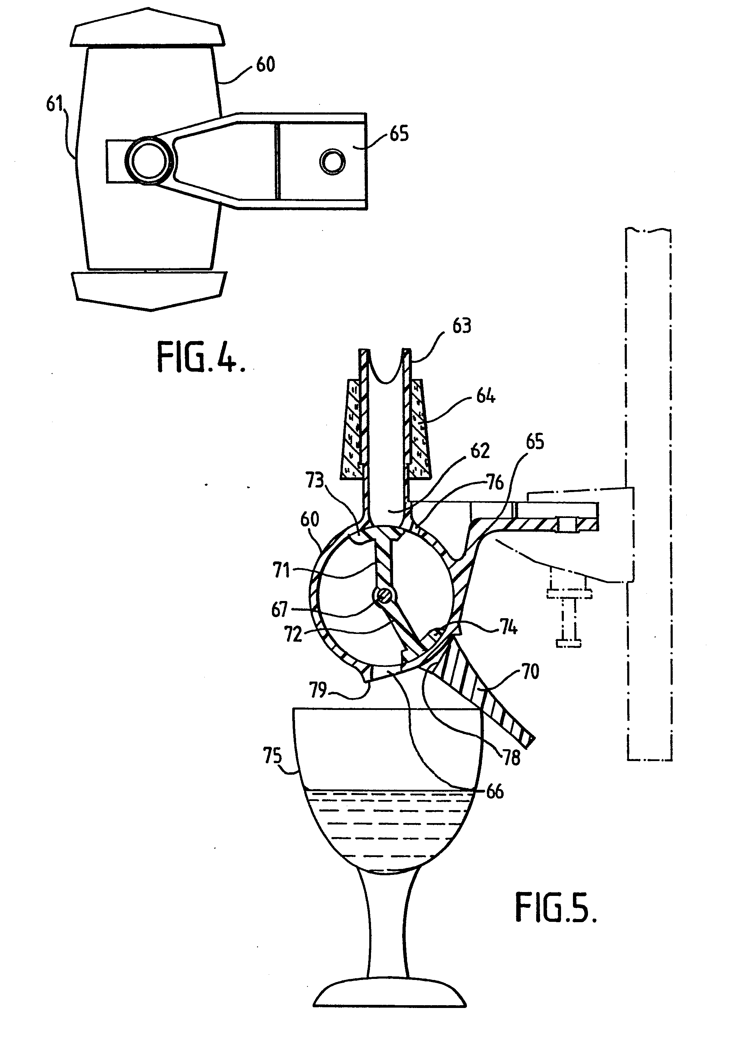

The dispenser which is the subject of the embodiment shown in Figures 3 to 6 comprises a chamber 60 made of transparent plastics material. When viewed in cross-section from the side, the chamber is generally circular, but as can be seen from Figures 4 and 6, the chamber gets progressively wider towards its central region 61.

The chamber has an inlet aperture 62 and a tube 63 extends vertically upwardly from this aperture. A bung 64 surrounds the tube 63 so that the dispenser can be plugged into the neck of an inverted bottle (not shown).

A mounting bracket 65 is formed integrally with the chamber so that the chamber can be securely mounted on a support surface.

In the bottom of the chamber there is an outlet aperture 66.

As best seen in Figure 6, a shaft 67 is arranged within the chamber, the ends of the shaft projecting out of the ends of the chamber through seals 68. An operating member 69 in the form of a stirrup-like device extends around the chamber to interconnect the ends of the shaft 67. The operating member has a downwardly projecting flap 70.

Rigidly attached to the shaft 67, within the chamber, is a pair of support legs 71 and 72. The legs 71 and 72 respectively support valve shoes 73 and 74 which sealingly engage the inner surface of the chamber.

The legs 71 and 72 and the shoes 73 and 74 are so shaped and positioned that when the flap 70 is in the vertical position shown in Figure 3, the inlet aperture 62 is open but the outlet aperture 66 is closed by the valve shoe 76. Thus drink can flow from the bottle to fill the chamber.

When it is desired to dispense a metered quantity of drink into a glass, the glass is first positioned in front of and below the dispenser and is then moved rearwardly to push against the flap 70 and move the flap 70 into the position shown in Figure 5, where a glass is illustrated by the reference numeral 75. Movement of the flap 70 rotates the shaft 67 and hence the legs 71 and 72. As the legs move from the position shown in Figure 3 to the position shown in Figure 5, the shoe 73 firstly completely closes the inlet aperture 62, isolating the chamber from the bottle. Further movement then causes the shoe 74 to uncover the outlet aperture 66 and the quantity of drink filling the chamber then pours out of the chamber into the glass 75. As can be seen from Figure 6, the outlet aperture 66 is arranged in the central region 61 of the chamber and the slope that is brought about by the fact that the chamber gets wider towards its central region assists all the drink within the chamber to drain out of the outlet aperture 66.

The shoe 73, in addition to closing the inlet aperture 62, during the final part of its movement opens a vent hole 76 which allows air to enter the chamber and further assists in draining the drink from the chamber.

Since the chamber is isolated from the bottle before dispensing takes place, the quantity of drink dispensed is a metered quantity, dependent upon the volume of the chamber.

The volume of the chamber may be adjusted by the manufacturer prior to final assembly by the insertion into the chamber of a slug 77, for example of plastics material, which is conveniently mounted on the shaft 67. The manufacturer can select the volume of the slug to adjust the volume of the chamber as desired but once the device has been assembled and sold the volume of the chamber cannot be altered without breaking open the chamber which would leave obvious evidence of tampering.

Once a drink has been dispensed, the glass 75 is removed and a return spring (not shown) returns the device to the position shown in Figure 3.

A secondary seal is provided for the outlet aperture 66 in that a surface 78 (see Figure 5) abuts against a surface 79 of the chamber when the flap is moved into the position shown in Figure 3. The surfaces 78 and 79 are inclined to the vertical so that they also co-operate to define a stop position for the flap 70.

This embodiment provides a drinks dispenser of simple construction and few moving parts which can readily be manufactured, for example from moulded plastics material.

Certain parts of the dispenser may be formed integrally. For example the shaft, legs, shoes and operating member may be arranged to be moulded together in various combinations so as to reduce the number of separate parts and so make the device more cost effective. The chamber may be moulded in two halves which, after insertion of the shaft, legs, shoes and slug may be ultrasonically welded together.

The dispenser enables a wide range of liquids to be dispensed. The same basic parts may be used to provide a dispenser which dispenses different volumes, by selecting an appropriate size of slug. The dispenser provides good visibility of the contents and the dispenser cannot easily be taken apart.

As can be seen from Figure 5, there is no long narrow exit spout on the device. Liquid to be dispensed passes from the interior of the chamber to the atmosphere over a path which is relatively short in length and is of relatively large cross-section. This reduces the quantity of liquid which tends to adhere to the surfaces of the exit aperture and hence assists in dispensing substantially all the metered quantity of drink into the glass 75. Any subsequent tendency for dripping to take place from the sides of the exit aperture is reduced by the secondary seal.

The invention is not restricted to the details of the foregoing embodiments. For instance the shape of the chamber 60 may vary, and it could for example be generally spherical.

The flap 70 may be provided with an advertising plaque, price plaque, or other such feature.

For some applications, for example the dispensing of non-alcoholic drinks, it may be desirable to have a free flow facility in which drink can be allowed to flow freely through the device from a bottle or other drinks container, without any metering. For such a requirement the leg 71 and shoe 73 may be omitted or moved to an inoperative position.

Although the device is primarily intended for the dispensing of drinks, it can be used for the dispensing of any liquid, including for example chemicals and medicines.

Means may be provided to limit the movement of the flap 70 towards the dispensing position shown in Figure 5, for example by moulding a projection on the exterior of the chamber against which the flap 70 abuts.

Claims

1. A device for dispensing a liquid drink from a container in which the drink is stored, the dispensing device comprising a chamber (60) connectable to the container to receive drink from the container, and a valve device operable to dispense the drink from the chamber (60); characterised in that the valve device is a rotary valve device (71, 72, 73, 74).

2. A device as claimed in claim 1, in which the chamber (60) has an inlet aperture (62) through which to receive the drink, and an outlet aperture (66) through which to dispense the drink, the rotary valve device (71, 72, 73, 74) being operable to close the inlet aperture (62) before opening the outlet aperture (66) so that a metered quantity of drink is dispensed, dependent upon the volume of the chamber (60).

3. A device as claimed in Claim 2, in which the rotary valve device (71, 72, 73, 74) is biased into a charging position in which the inlet aperture (62) is open and the outlet aperture (66) is closed, but is movable against the action of the bias into a dispensing position in which the inlet aperture (62) is closed and the outlet aperture (66) is open.

4. A device as claimed in Claim 3, in which the rotary valve device has an operating member (70) which can be moved to move the rotary valve device (71, 72, 73, 74) from the charging position to the dispensing position.

5. A device as claimed in Claim 3 or Claim 4, in which the rotary valve device (71, 72, 73, 74) is biased by a spring device.

6. A device as claimed in any one of the preceding claims, in which the rotary valve device comprises a rotary valve member (71, 72, 73, 74) arranged for rotation within the chamber (60).

7. A device as claimed in Claim 6, in which the rotary valve member (71, 72, 73, 74) has a pair of valve surfaces, one to open and close the inlet aperture (62) and a second to open and close the outlet aperture (66).

8. A device as claimed in Claim 7, in which the valve surfaces comprise shoes (73, 74) each mounted on a support leg (71, 72), the legs (71, 72) being mounted on a pivot.

9. A device as claimed in Claim 8, in which the pivot extends out of the chamber (60) to the operating member (70).

10. A device as claimed in Claim 8 or Claim 9, in which the pivot comprises a shaft (67) each end of which projects out of the chamber (60), the operating member (70) extending around the chamber (60) to interconnect the ends of the shaft (67).

11. A device as claimed in any one of the preceding claims, in which the rotary valve device (71, 72, 73, 74) ia arranged, when dispensing drink, to uncover a vent hole (76) to permit air to enter the chamber (60) as drink flows out of the chamber (60).

12. A device as claimed in any one of the preceding claims, in which the volume of the chamber (60) is adjustable to enable the quantity of drink dispensed to be adjusted.

13. A device as claimed in Claim 12, in which one or more slugs (77) are provided which may be inserted into the chamber (60) to reduce its volume.

14. A device as claimed in Claim 13, in which the or each slug (77) is mounted on the shaft (67).

15. A device as claimed in Claim 2, or any one of Claims 3 to 14 when dependent directly or indirectly on claim 2, in which the rotary valve device is arranged to provide a secondary seal for the outlet aperture (66).

16. A device as claimed in Claim 15, in which the secondary seal is provided by co-operation between the operating member (70) and the chamber (60).

FIG.1.

FIG.2.

0077629

3/4

FIG.3.

FIG.6.

FIG.4.

FIG.5.